# FASCICULE DE BREVET EUROPEEN

(11) **EP 2 861 464 B1**
(45) Date de publication et mention de la délivrance du brevet: **24.08.2016**
(21) Numéro de dépôt: 13703555.6
(22) Date de dépôt: 30.01.2013
(51) Int. Cl.: B60R 13/02

(54) **GARNITURE CLIPPEE DE PORTE DE VEHICULE AUTOMOBILE EN MATERIAU POLYMERE ET PORTE EQUIPEE DE CETTE GARNITURE**
ZUGESCHNITTENE VERKLEIDUNG AUS POLYMERMATERIAL FÜR DIE TÜR EINES KRAFTFAHRZEUGS UND TÜR MIT BESAGTER VERKLEIDUNG
CLIPPED TRIM MADE OF A POLYMERIC MATERIAL FOR THE DOOR OF A MOTOR VEHICLE, AND DOOR PROVIDED WITH SAID TRIM

(30) Priorité: 15.06.2012 FR 1255616
(43) Date de publication de la demande: 22.04.2015
(73) Titulaire: Renault S.A.S., 92100 Boulogne-Billancourt (FR)
(72) Inventeur: BOUILLON, Jean-Charles, F-78940 La Queue Lez Yvelines (FR); GUERLIN, Philippe, F-91540 Mennecy (FR); MARTZ, Philippe, F-78650 Beynes (FR)
(86) Numéro de dépôt international: PCT/EP2013/051770
(87) Numéro de publication internationale: WO 2013/185935

(56) Documents cités:
- DE-A1-102010 025 941
- DE-A1-102011 118 608

## Description

L'invention concerne une garniture clippée de porte de véhicule automobile en matériau polymère et une porte équipée de cette garniture.

Les garnitures de porte de véhicule automobiles sont formées de différentes parties assemblées les unes aux autres puis fixées à la porte. En général, une garniture de porte est formée de l'assemblage d'une garniture principale qui recouvre la quasi-totalité de la surface de la tôle formant la porte et de garnitures secondaires solidarisées à la garniture principale, ces garnitures secondaires pouvant former l'accoudoir ou toute autre fonctionnalité de la porte, par exemple un rangement de type vide poche, un médaillon couleur ou un bandeau supérieur.

L'assemblage des différentes parties formant la garniture doit être robuste. La garniture doit en effet supporter des efforts importants verticalement au niveau de sa partie accoudoir et doit en outre résister au déploiement d'un coussin gonflable latéral sans que l'une de ses parties ne se détache sous l'effet de ce déploiement, ce qui pourrait blesser l'occupant assis à côté de la porte.

L'état de la technique le plus proche est DE102011118608 A1. DE102011118608 A1 divulgue une garniture de porte de véhicule automobile en matériau polymère, ladite garniture comprenant une partie principale formant support et une partie secondaire formant accoudoir. Les deux parties ne sont pas séparées mais elles forment une seule entité.

Ces garnitures sont généralement en matériau polymère et leurs parties peuvent être assemblées par différents procédés.

Un premier procédé consiste à utiliser la technique de la soudure par ultrasons, également appelée boutrolage, qui consiste à associer une pression d'appui à la vibration ultrasonore. L'énergie produite par les ultrasons provoque un échauffement intense de la matière, laquelle fusionne à l'interface d'assemblage. Cette technique présente l'avantage d'être robuste mais nécessite un investissement important en machines dédiées à l'assemblage.

Un autre procédé consiste à visser toutes les parties de la garniture les unes aux autres. Ce procédé présente l'avantage de nécessiter un faible investissement en moyens d'assemblage mais demande beaucoup de temps de montage par des opérateurs. La répétabilité de l'assemblage est en outre moins bonne que pour le précédent procédé et les vis représentent un coût non négligeable.

Il a également été envisagé d'assembler les différentes parties d'une garniture par clippage, ce qui présente également l'avantage de nécessiter un faible investissement en moyens d'assemblage. Toutefois, la conception s'avère compliquée et le risque de vieillissement des matériaux polymère utilisés pour les liaisons ne lui ont pas encore permis de voir le jour, ce vieillissement pouvant conduire à une rupture des liaisons, en particulier lors d'un choc.

Cette sensibilité au vieillissement est particulièrement importante pour les polymères peu coûteux, tels que les polypropylènes non chargés, utilisés couramment pour la réalisation de garnitures, en particulier dans les véhicules à bas prix mis sur le marché. Ces matériaux polymères peu coûteux évoluent en effet dans le temps et peuvent se déformer suivant les contraintes qui leur sont imposées. Une déformation importante peut ainsi engendrer une prise de jeu entre les différentes parties formant les garnitures de porte. Ces jeux permettent de petits déplacements entre les pièces qui peuvent générer du bruit lors de l'utilisation du véhicule, ce qui n'est pas souhaitable.

L'invention vise à pallier ces inconvénients en proposant une garniture de porte de véhicule automobile en matériau polymère dont les moyens d'assemblage sont également en matériau polymère et permettent d'obtenir un assemblage robuste par encliquetage.

A cet effet, l'objet de l'invention concerne une garniture de porte de véhicule automobile en matériau polymère, ladite garniture comprenant une partie principale formant support et une partie secondaire formant accoudoir fixée à la partie principale, caractérisée en ce que la partie secondaire présente une bande périphérique d'assemblage à la partie principale s'étendant sur tout son pourtour et une surface d'appui s'étendant sensiblement horizontalement lorsque la garniture est fixée à la porte et la porte fixée au véhicule et en ce que les parties principale et secondaire sont fixées l'une à l'autre par des moyens d'assemblage reliant ladite bande périphérique d'assemblage à la partie principale, ces moyens d'assemblage comprenant chacun deux éléments dont l'un est solidaire de l'une des parties principale ou secondaire et l'autre élément est solidaire de l'autre des parties principale ou secondaire. En particulier, chaque élément des moyens d'assemblage est réalisé d'une pièce avec l'une des parties principale ou secondaire, par exemple par moulage.

Selon l'invention, ces moyens d'assemblage comprennent :
- au moins deux boîtiers de reprise d'effort principaux conformés et positionnés pour reprendre des efforts appliqués selon une même direction sensiblement perpendiculaire à la surface d'appui, les boîtiers de reprise d'effort principaux étant situés le long de la surface d'appui,
- une pluralité de moyens d'encliquetage répartis régulièrement le long de ladite bande périphérique d'assemblage.

Un tel agencement permet une fixation robuste des deux parties de garniture, les boîtiers de reprise d'effort principaux permettant de répartir les efforts appliqués sur la surface d'appui de la partie secondaire. Ils sont en effet situés le long de la surface d'appui, autrement dit à la même hauteur verticalement que cette surface d'appui sur la bande périphérique d'assemblage ou bien ils peuvent être disposés juste au dessus ou juste en dessous de cette surface d'appui sur la bande périphérique d'assemblage. Les positions décrites dessus peuvent être combinées et seront choisies en fonction de la forme de la bande périphérique d'assemblage et de la place disponible.

Un seul boîtier de reprise d'effort principal peut suffire à chaque extrémité de la surface d'appui.

Avantageusement et de manière non limitative, les moyens d'assemblage comprennent au moins deux boîtiers de reprise d'effort secondaires conformés pour reprendre des efforts appliqués suivant une direction sensiblement perpendiculaire à la surface d'appui, ces boîtiers de reprise d'effort secondaires étant répartis au dessus et au dessous de la surface d'appui. Ces boîtiers de reprise d'effort secondaires sont ainsi distants de la surface d'appui, et donc des boîtiers de reprise d'effort principaux, et peuvent participer à la stabilisation de la surface d'appui. Autrement dit, leur présence contribue à maintenir cette surface d'appui sensiblement plane. Ils seront ainsi avantageusement répartis de manière équilibrée afin de favoriser la stabilisation de la surface d'appui. Par exemple, on peut prévoir, deux boîtiers de reprise d'effort secondaire situés au dessus de la surface d'appui et deux boîtiers de reprise d'effort secondaire situés en dessous de la surface d'appui, ces quatre boîtiers étant répartis régulièrement suivant une direction parallèle à la surface d'appui.

Avantageusement et de manière non limitative, les moyens d'assemblage comprennent au moins un autre boîtier de reprise d'effort secondaire conformé pour reprendre des efforts appliqués suivant une direction sensiblement perpendiculaire au plan défini par la partie principale (c'est-à-dire suivant une direction transversale au véhicule), au moins un de ces boîtiers de reprise d'effort secondaires étant situé en dessous de la surface d'appui. De tels boîtiers de reprise d'effort secondaires peuvent participer à la résistance de la liaison entre les parties principale et secondaire de la garniture à des efforts exercés suivant une direction horizontale, par exemple lors du déploiement d'un coussin gonflable latéral.

Un seul boîtier de reprise d'effort secondaire de ce type peut être prévu, par exemple en dessous de la surface d'appui, notamment sensiblement à hauteur du milieu de la surface d'appui.

Avantageusement et de manière non limitative, les moyens d'assemblage comprennent au moins un moyen de fixation destiné à fixer la garniture à une tôle formant la porte. Une telle fixation permet également de participer à la résistance de la liaison entre les parties principale et secondaire de la garniture à des efforts exercés suivant une direction horizontale, par exemple lors du déploiement d'un coussin gonflable latéral.

Avantageusement et de manière non limitative, les moyens d'encliquetage sont espacés d'une même distance de 40 à 130 mm, par exemple de 100 mm. Cet espacement participe à l'obtention d'une fixation robuste des deux parties de garniture.

Les boîtiers de reprise d'effort principaux et secondaires peuvent être identiques, seule leur orientation pouvant être modifiée.

Les boîtiers de reprise d'effort secondaires peuvent être simples de conception. Ils peuvent comprendre un élément mâle en forme de croix, notamment de croix dont les branches sont à angle droit, et un élément femelle comprenant par exemple un orifice de forme complémentaire de la croix.

Les boîtiers de reprise d'effort secondaires peuvent également présenter une forme plus complexe comme celle décrite ci-après.

Par exemple, chaque boîtier de reprise d'effort principal ou secondaire peut comprendre un élément de reprise d'effort solidaire de l'une des parties principale ou secondaire et un élément de réception de cet élément de reprise d'effort solidaire de l'autre des parties principale ou secondaire, et :
- l'élément de reprise d'effort comprend un caisson creux de forme sensiblement parallélépipédique comprenant une paroi supérieure et une paroi inférieure reliées par des parois latérales dont au moins quatre parois latérales planes parallèles deux à deux, l'une des parois latérales étant ouverte, le caisson creux comprenant sur sa paroi supérieure, des cloisons formant une croix d'indexage à quatre branches, chaque branche s'étendant sensiblement perpendiculairement à l'une desdites quatre parois latérales planes du caisson et au moins deux branches opposées de la croix d'indexage présentent chacune une extrémité libre formant un plan s'étendant dans la continuité du plan de la face externe de la paroi latérale plane adjacente, et
- l'élément de réception comprend une paroi de fond et des parois latérales dont au moins quatre parois latérales planes parallèles deux à deux, les parois de fond et latérales définissant un logement conformé pour recevoir l'élément de reprise d'effort, cet élément de réception étant conformé pour que, lorsque l'élément de reprise d'effort est logé dans ledit logement :
- les parois latérales de l'élément de réception soient en contact avec les parois latérales du caisson de l'élément de reprise d'effort,
- la paroi de fond de l'élément de réception soit en contact avec la croix d'indexage l'élément de reprise d'effort,
- au moins deux parois planes opposées de l'élément de réception soient en contact avec les extrémités libres planes de deux branches opposées de la croix d'indexage de l'élément de reprise d'effort.

Un tel agencement des deux éléments mâle et femelle permet de réduire les dimensions de ces éléments et d'assurer à la fois une fonction d'indexation et de reprise d'efforts des deux parties de garniture à assembler, tout en respectant leur aspect extérieur.

La réalisation d'un caisson creux sur l'élément de reprise d'effort permet d'éviter à la fabrication l'apparition de retassures sur la face externe de la paroi inférieure, qui peut ainsi être une face visible. L'élément de reprise d'effort peut ainsi être solidaire de la partie principale de garniture.

Ce caisson creux et la croix d'indexation jouent en outre un rôle de reprise des efforts par coopération avec le logement défini dans l'élément de réception décrit. Les efforts subis sont notamment répartis au sein des pièces comportant l'élément de reprise d'effort et l'élément de réception, en partie grâce au contact étroit entre les parois latérales de l'élément de réception, les parois latérales planes du caisson creux et les extrémités planes de la croix d'indexation. Une telle répartition des efforts permet notamment d'éviter l'apparition de blanchiment sur des matériaux polymère foncés, aux endroits de concentration des contraintes.

La reprise d'effort est en outre plus importante selon une direction parallèle à la direction des branches dont l'extrémité libre s'étend dans la continuité du plan de la face externe de la paroi latérale plane adjacente. Cet agencement particulier permet d'augmenter considérablement la reprise d'effort dans cette direction, ce qui peut être particulièrement utile lorsque des pièces assemblées subissent des contraintes répétées élevées dans une direction principale.

Enfin, la croix d'indexation permet l'indexation des parties de garniture à assembler tout en renforçant structurellement les branches. En outre l'agencement de ces différents éléments entre eux permet de réduire la dimension de l'ensemble formé de l'élément de reprise d'effort et de l'élément de réception, ce qui autorise son utilisation pour l'assemblage de deux pièces dans un environnement particulièrement contraint. Les branches de la croix d'indexation peuvent être perpendiculaires les unes aux autres.

Il est ainsi possible de réaliser un boîtier de reprise d'effort dont les dimensions peuvent être considérablement réduites par rapport aux boîtiers de reprise d'effort de l'art antérieur :
- la dimension la plus grande entre deux parois planes parallèles de l'élément de réception, perpendiculairement à la paroi de fond de cet élément de réception, est typiquement comprise entre 18 et 30 mm, par exemple 22 mm.
- la dimension la plus petite entre deux parois planes parallèles de l'élément de réception, perpendiculairement à la paroi de fond de cet élément de réception, est typiquement comprise entre 14 et 20 mm, par exemple 15 mm.
- la dimension, perpendiculairement à la paroi de fond de l'élément de réception, notamment le long de l'axe de vissage, depuis la face visible (du côté opposé au caisson) de la paroi inférieure de l'élément de reprise d'effort jusqu'à la face visible (externe) de la paroi de fond de l'élément de réception, est typiquement comprise entre 15 et 20 mm, par exemple 17 mm.

L'élément de réception et l'élément de reprise d'effort peuvent avantageusement être conformés de manière à ce qu'il n'existe pas de jeu entre leurs parois latérales planes en contact, en particulier suivant la direction des branches de la croix d'indexation dont les extrémités libres planes s'étendent dans la continuité de la face externe des parois latérales planes adjacentes du caisson creux de l'élément de reprise.

Avantageusement et de manière non limitative, des éléments de reprise d'effort sont orientés de sorte que des branches de la croix d'indexation, dont les extrémités libres planes s'étendent dans la continuité de la face externe des parois latérales planes adjacentes du caisson creux de l'élément de reprise, s'étendent dans une direction sensiblement perpendiculaire à la surface d'appui de la partie secondaire de garniture. Ceci permet une meilleure résistance des moyens d'assemblage aux forces exercées sur la surface d'appui, de sorte que cet agencement sera plus particulièrement utilisé pour réaliser des boîtiers de reprise d'effort principaux, et éventuellement les boîtiers de reprise d'effort secondaires qui doivent répartir des efforts exercés suivant une direction sensiblement perpendiculaire à la surface d'appui.

Avantageusement et de manière non limitative, le caisson creux de l'élément de reprise d'effort comprend sur la face externe de sa paroi supérieure un cylindre pourvu d'un alésage traversant fileté, ledit alésage fileté traversant la paroi supérieure, chaque branche de la croix d'indexation étant solidaire de la face externe du cylindre et l'axe de l'alésage étant confondu avec l'axe de convergence des branches de la croix d'indexation. La paroi de fond de l'élément de réception comprend alors un orifice traversant positionné pour que son axe soit confondu avec l'axe du cylindre de l'élément de reprise d'effort lorsque ce dernier est logé dans le logement, cet orifice présentant un diamètre égal ou supérieur au diamètre de l'alésage du cylindre.

Cet agencement permet de fixer l'élément de reprise d'effort à l'élément de réception qui vient le coiffer au moyen d'une vis, ce qui permet de réduire les risques d'apparition de vibrations entre ces deux éléments au cours du temps suite au vieillissement des matériaux polymères utilisés. En outre, les branches formant la croix d'indexation renforcent la structure du cylindre.

On peut notamment prévoir que seuls les boîtiers de reprise d'efforts principaux comportent des vis de fixation de leurs éléments, et éventuellement les boîtiers de reprise d'effort secondaire conçus pour reprendre les efforts exercés suivant une direction sensiblement horizontale.

Les moyens d'encliquetage peuvent être de tout type comprenant un élément mâle solidaire de l'une des parties principale ou secondaire et un élément femelle conformé pour coopérer avec l'élément mâle suivant une direction de clippage, cet élément femelle étant solidaire de l'autre des parties principale ou secondaire.

Avantageusement et de manière non limitative, les éléments mâle et femelle présentant un plan de symétrie contenant la direction de clippage lorsqu'ils sont clippés, et :
- l'élément mâle s'étend suivant la direction de clippage et comprend de haut en bas dans la direction de clippage : une tête, une partie médiane, une base de section transversale croissante vers le bas, un support plan perpendiculaire au plan de symétrie, la tête présentant une forme conique suivant une section perpendiculaire au plan de symétrie et contenant la direction de clippage, la pointe du cône étant dirigée vers le haut, et la tête comporte au moins deux parois inférieures planes symétriques par rapport audit plan de symétrie, lesdites parois inférieures planes étant reliées chacune à une paroi latérale plane de la partie médiane, ces parois latérales planes étant symétriques par rapport au plan de symétrie, chaque paroi inférieure de la tête formant avec la paroi latérale de la partie médiane un angle de 100 à 120°, et la largeur de la tête, suivant une direction perpendiculaire audit plan de symétrie est supérieure à la hauteur de la tête suivant la direction de clippage,
- l'élément femelle comporte un support plan pourvu d'un orifice de réception de l'élément mâle, cet élément femelle étant conformé pour que, lorsque le support de l'élément mâle est en appui contre le support de l'élément femelle, les bords de l'orifice soient en contact avec les parois inférieures de la tête et les parois latérales de la partie médiane de l'élément mâle, sans jeu suivant la direction de clippage.

Un tel agencement permet un montage sans jeu suivant la direction de clippage entre les deux éléments mâle et femelle, en partie du fait que les bords de l'orifice de l'élément femelle sont en appui contre des parois de l'élément mâle formant un angle de 100 à 120° l'une avec l'autre, ce qui permet une coopération particulièrement stable entre les bords de l'orifice de l'élément femelle et l'élément mâle, lorsque l'élément mâle est clippé dans l'élément femelle, après l'insertion de la tête de l'élément mâle au travers de l'orifice de l'élément femelle.

Un tel agencement des moyens d'encliquetage permet également une bonne tenue à l'arrachement suivant cette même direction de clippage, une bonne tenue aux sollicitations transversales (perpendiculairement au plan de symétrie). De plus, ces moyens d'encliquetage sont peu sensibles aux sollicitations longitudinales (perpendiculaires aux sollicitations transversales et à la direction de clippage).

En outre, du fait de la forme particulière de la tête de l'élément mâle, cette dernière subit peu ou pas de déformation lors de sa fabrication. La forme conique permet également le pilotage et le centrage de l'élément mâle lorsqu'il est rapproché de l'orifice de l'élément femelle.

Enfin, cet agencement permet de réduire la hauteur de l'élément mâle : ce dernier peut ainsi présenter une hauteur totale (dimension selon la direction de clippage de la tête, de la partie médiane et de la base) de 13 à 17 mm, par exemple de 15mm. Ceci est particulièrement avantageux lorsque l'élément mâle sert à assembler des pièces dont les environnements sont très contraints, comme les garnitures d'habitacle de véhicule automobile.

Avantageusement et de manière non limitative, l'orifice de l'élément femelle comprend au moins deux languettes planes symétriques par rapport au plan de symétrie, chaque extrémité libre d'une languette étant formée de deux parois d'extrémité planes inclinées d'un même angle que l'angle formé entre chaque paroi inférieure de la tête de l'élément mâle et la paroi latérale adjacente de la partie médiane, de sorte que ces parois d'extrémité épousent les parois inférieures et latérales de l'élément mâle lorsque ce dernier est clippé dans l'élément femelle. Cette forme particulière peut participer à l'absence de formation d'un jeu dans la direction de clippage entre l'élément femelle et l'élément mâle assemblés.

Les languettes de l'élément femelle peuvent être reliées au support par une zone de matière amincie dont l'épaisseur est inférieure à l'épaisseur du support et/ou à l'épaisseur de la languette, par exemple à l'épaisseur du support et de la languette.

Une telle zone de matière amincie permet d'assurer une certaine flexibilité des languettes facilitant l'insertion de l'élément mâle au travers de l'orifice de l'élément femelle et pouvant également participer au maintien des extrémités des languettes sous la tête de l'élément mâle afin de réduire ou supprimer le jeu suivant la direction de clippage.

Cette zone de matière amincie peut être située à une distance prédéterminée de l'appui du support de l'élément mâle lorsque l'élément mâle est clippé dans l'élément femelle. En particulier, cette distance peut être calculée pour permettre l'application d'une force suivant la direction de clippage sur le support de l'élément femelle, cette force étant appliquée entre l'appui et la zone amincie et assurant le clippage de l'élément mâle dans l'élément femelle. L'appui du support de l'élément mâle peut être matérialisé par au moins deux appuis saillant perpendiculairement de la face du support plan de l'élément mâle solidarisée à la base, situés symétriquement de part et d'autre de la base par rapport au plan de symétrie. De tels appuis peuvent s'étendre le long de la base et former ainsi des nervures de part et d'autre de l'élément mâle.

La distance entre l'appui du support de l'élément mâle et la zone de matière amincie de l'élément femelle peut être de 2,5 mm à 5 mm, par exemple 3,5 mm.

L'invention comporte également une porte de véhicule comprenant une tôle et une garniture selon l'invention.

L'invention est maintenant décrite en référence aux dessins annexés, non limitatifs, dans lesquels :
- la figure 1 est une représentation schématique d'une garniture de porte de véhicule selon l'invention ;
- les figures 2 et 3 sont des vues en perspective d'un élément de reprise d'effort d'un boîtier de reprise d'effort principal vue de deux côtés opposés,
- la figure 4 est une vue en perspective de dessus d'un élément de réception coiffant un élément de reprise d'efforts tel que représenté sur les figures 2 et 3 ;
- la figure 5 est une vue en coupe selon la ligne AA de la figure 4.
- la figure 6 est une vue en perspective d'un assemblage de deux pièces en matériau polymère réalisé au moyen d'un élément mâle et d'un élément femelle selon un mode de réalisation de l'invention ;
- la figure 7 est une vue en coupe transversale de l'élément mâle et de l'élément femelle représentés sur la figure 6, perpendiculairement à leur plan de symétrie ;
- la figure 8 représente une vue en coupe transversale agrandie de la tête et de la partie médiane de l'élément mâle représenté sur les figures 6 et 7 ;
- la figure 9 représente une vue en coupe transversale agrandie de languettes de l'élément femelle représenté sur les figures 6 et 7.

Dans la présente description, les termes avant, arrière, supérieur, inférieur, font référence aux directions avant et arrière du véhicule, lorsque la garniture est fixée sur une porte elle-même montée sur le véhicule (la porte s'étend donc sensiblement verticalement). Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±10°, ou même de l'ordre de ±5°, par exemple de ±1°, avec une direction/un plan horizontal, longitudinal ou vertical.

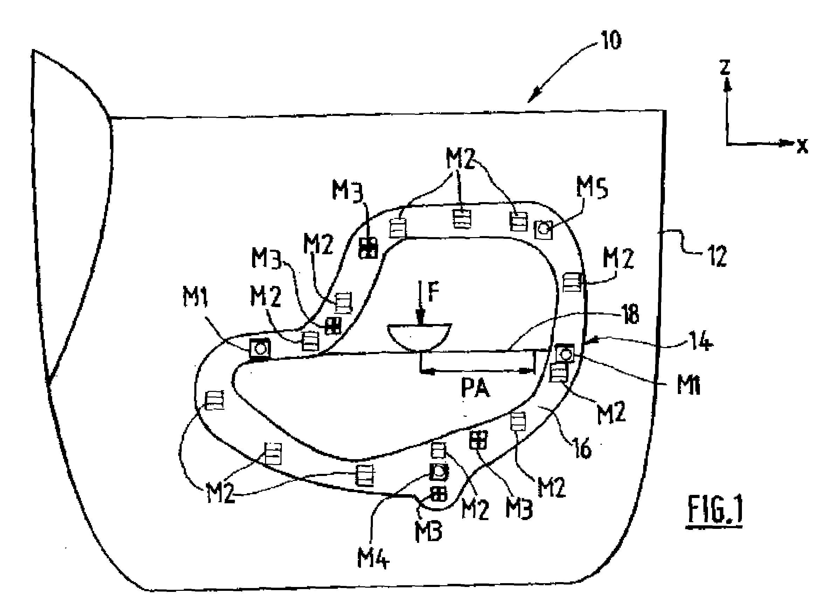

La figure 1 représente une garniture 10 de porte comprenant une partie principale 12 formant support et une partie secondaire 14 formant accoudoir fixée à la partie principale 12. La partie secondaire 14 est positionnée sensiblement au centre de la partie principale 12.

La partie secondaire 14 présente une bande périphérique d'assemblage 16 à la partie principale 12 s'étendant sur tout son pourtour et une surface d'appui 18 s'étendant sensiblement horizontalement lorsque la garniture est fixée à la porte et la porte fixée au véhicule. Cette surface d'appui 18 est symbolisée par une ligne horizontale sur la figure 1. Sur cette figure 1, est également représentée symboliquement la direction de la force F appliquée habituellement sur cette surface d'appui 18. Cette force F est généralement susceptible d'être appliquée sur une partie de la surface d'appui 18, correspondant à une plage d'appui PA particulière, telle que représenté sur la figure 1.

La figure 1 représente la face cachée des garnitures principale 12 et secondaire 14 qui va être appliquée contre la tôle de la porte (non représentée). On comprend ainsi que la partie principale 12 de la garniture présente une découpe (non représentée) par laquelle est introduite la partie secondaire 14 de la garniture, la bande périphérique d'assemblage 16 de la partie secondaire venant en appui contre le bord de cette découpe, du côté de la face cachée de la partie principale 12.

Les parties principale 12 et secondaire 14 sont fixées l'une à l'autre par des moyens d'assemblage reliant la bande périphérique d'assemblage 16 à la partie principale 12. Ces moyens d'assemblage comprennent chacun deux éléments dont l'un est solidaire de l'une des parties principale 12 ou secondaire 14 et l'autre élément est solidaire de l'autre des parties principale 12 ou secondaire 14.

Les parties principale et secondaire de la garniture leurs moyens d'assemblage sont de préférence réalisées dans le même matériau polymère. Le matériau polymère utilisé peut être un polymère peu couteux, par exemple un polypropylène non chargé, présentant une rigidité suffisante pour ne pas se déformer aux températures d'utilisation, qui peuvent être comprises de -30°C à +100°C.

Les moyens d'assemblage représentés sur la figure 1 comprennent :
- deux boîtiers de reprise d'effort principaux M1 conformés et positionnés pour reprendre des efforts appliqués selon une même direction Z sensiblement perpendiculaire à la surface d'appui 18, ces boîtiers de reprise d'effort principaux M1 étant situés le long de la surface d'appui 18 à gauche et à droite de la partie secondaire 14,
- une pluralité de moyens d'encliquetage M2 répartis régulièrement le long de la bande périphérique d'assemblage 16, avec un même espacement entre deux moyens d'encliquetage M2 adjacents,
- quatre boîtiers de reprise d'effort secondaires M3 conformés pour reprendre des efforts appliqués suivant une direction Z sensiblement perpendiculaire à la surface d'appui 18, ces boîtiers de reprise d'effort secondaires M3 étant répartis au dessus et au dessous de la surface d'appui 18,

- un boîtier de reprise d'effort secondaire M4 conformé pour reprendre des efforts appliqués suivant une direction X sensiblement perpendiculaire au plan défini par la partie principale 12, situé en dessous de la surface d'appui 18, sensiblement à hauteur du milieu de la surface d'appui 18,
- un moyen de fixation M5 destiné à fixer la garniture 10 à une tôle formant la porte (non représentée).

Dans l'exemple représenté, les quatre boîtiers de reprise d'effort secondaire M3 sont répartis sensiblement régulièrement suivant la direction de l'axe X le long de la surface d'appui 18, entre les deux boîtiers de reprise d'effort principaux M1.

Ces boîtiers de reprise d'effort secondaires M3 comprennent un élément mâle formé de parois en forme de croix, notamment de croix dont les branches sont à angle droit, et un élément femelle comprenant un orifice de forme complémentaire de la croix.

Certains des moyens d'assemblage peuvent être positionnés les uns à côté des autres, par exemple verticalement en Z, tel que pour l'un des boîtiers de reprise d'effort secondaires M3, l'un des autres boîtiers de reprise d'effort secondaires M4 et pour l'un des moyens d'encliquetage M2 de l'exemple de la figure 1. Dans une zone fragilisée, par exemple par un trou (typiquement pour accueillir et fixer la commande d'ouverture de porte) et/ou pour accepter une grande diversité de formes (styles) des pièces assemblées, il est approprié de combiner des moyens d'assemblage en les associant dans des zones déterminées et/ou de les rapprocher des zones de fragilité, de manière à répartir les efforts subis et ainsi améliorer la liaison. Dans l'exemple, ces moyens d'assemblage sont superposés sensiblement à hauteur du milieu de la surface d'appui 18.

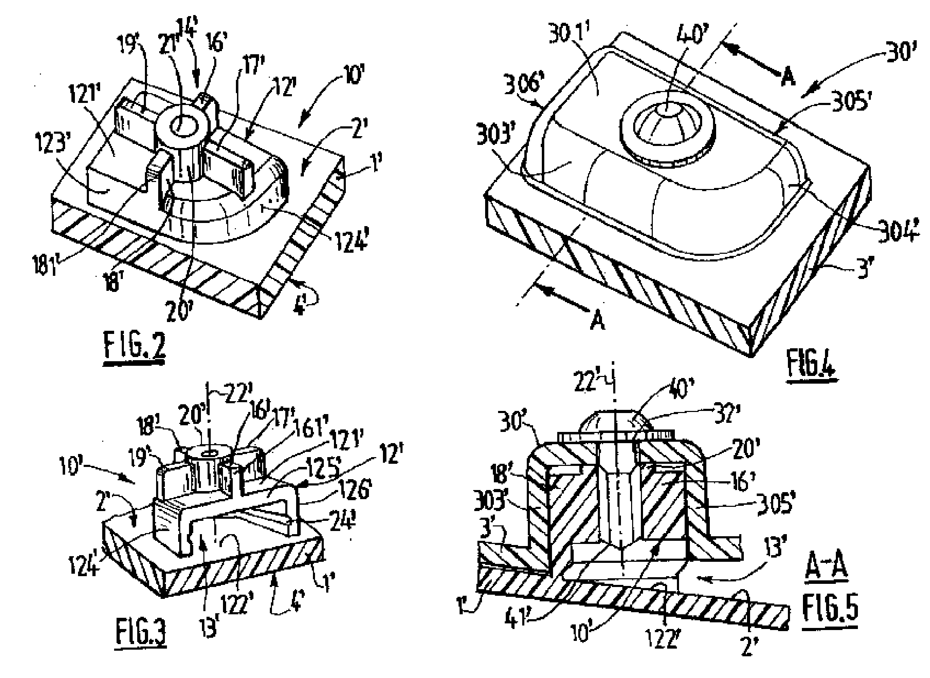

Un exemple de réalisation des boîtiers de reprise d'effort principaux M1 est décrit en référence aux figures 2 à 5.

Les figures 2 et 3 représentent un élément de reprise d'effort 10' en matériau polymère.

Cet élément de reprise d'effort 10' comprend un caisson creux 12' de forme sensiblement parallélépipédique. Par forme sensiblement parallélépipédique, on entend que les parois principales font partie d'un parallélépipède mais qu'elles peuvent être reliées par des parois courbes ou planes ne faisant pas partie de ce parallélépipède.

Les faces externes du caisson creux 12' sont les faces visibles de l'extérieur du caisson creux 12', en opposition aux faces internes délimitant l'espace libre 13' intérieur du caisson creux 12'.

Ce caisson creux 12' comprend une paroi supérieure 121' et une paroi inférieure 122' reliées par quatre parois latérales 123', 124', 125', 126' planes parallèles deux à deux, l'une 125' des parois latérales étant ouverte (figure 3). Les parois 123' et 125' sont sensiblement perpendiculaires aux parois 124', 126'.

Le caisson creux 12' comprend également sur sa paroi supérieure 121', des cloisons formant une croix d'indexation 14' à quatre branches 16', 17', 18', 19'. Ces branches 16'-19' sont sensiblement perpendiculaires entre elles et à la paroi supérieure 121' du caisson creux dans l'exemple représenté.

Chaque branche 16', 17', 18', 19' s'étend sensiblement perpendiculairement à l'une desdites quatre parois latérales planes respectivement 123', 124', 125', 126' du caisson creux 12'. Deux branches opposées 16', 18' de la croix d'indexation 14' présentent chacune une extrémité libre 161', 181' formant un plan s'étendant dans la continuité du plan de la face externe de la paroi latérale plane adjacente 123', 125' respectivement.

Le caisson creux 12' représenté comprend sur sa paroi supérieure 121' un cylindre 20' pourvu d'un alésage traversant fileté 21'. Cet alésage fileté 21' traverse entièrement la paroi supérieure 121' et débouche dans l'espace libre 13' situé entre la paroi supérieure 121' et la paroi inférieure 122' (figures 3 et 5).

Chaque branche 16', 17', 18', 19' de la croix d'indexation 14' est solidaire de la face externe du cylindre 20', l'axe 22' de l'alésage 21' étant confondu avec l'axe de convergence des branches 16', 17', 18', 19' de la croix d'indexation 14'.

La hauteur du cylindre au dessus de la paroi supérieure 121' du caisson creux 12' suivant son axe 22' peut être supérieure à la hauteur des branches 16', 17', 18', 19' de la croix d'indexation 14' suivant ce même axe 22', tel que représenté sur la figure 5 de cet exemple.

Sur les figures 4 et 5, est également représenté un élément de réception 30' en matériau polymère destiné à coopérer avec l'élément de reprise d'effort 10' décrit en référence aux figures 2, 3 et 5. Seules les faces externes de l'élément de réception 30' sont visibles sur la figure 4.

Cet élément de réception 30' comprend une paroi de fond 301' et quatre parois latérales planes 303', 304', 305', 306' parallèles deux à deux, les parois de fond 301' et latérales 303', 304', 305', 306' définissant un logement conformé pour recevoir l'élément de reprise d'effort 10'. Ce logement présente ainsi une forme sensiblement parallélépipédique, complémentaire de la forme externe de l'élément de reprise d'effort 10'.

Les parois latérales planes 303', 304', 305', 306' sont reliées par un arrondi à la paroi de fond 301' et sont sensiblement perpendiculaires à cette paroi de fond 301'. Les parois latérales planes 303' et 305' sont sensiblement perpendiculaires aux parois latérales planes 304' et 306'.

L'élément de réception 30' est également conformé pour que, lorsque l'élément de reprise d'effort 10' est logé dans le logement :
- les parois latérales de l'élément de réception 30' soient en contact avec les parois latérales du caisson creux 12' de l'élément de reprise d'effort 10',
- la paroi de fond 301' de l'élément de réception 30' est en contact avec le cylindre 20' de l'élément de reprise d'effort 10',
- deux parois planes opposées 303', 305' sont en contact avec les extrémités libres planes 161', 181' de deux branches 16', 18' opposées de la croix d'indexation 14' de l'élément de reprise d'effort 10' (voir figure 5) ainsi qu'avec les faces 123' et 125' du caisson creux 12' de l'élément de reprise d'effort 10'.

Tel que représenté sur la figure 5, aucun jeu n'est laissé entre les parois latérales planes en contact de l'élément de réception 30' et de l'élément de reprise d'effort 10' suivant la direction des branches 16', 18' de la croix d'indexation.

La paroi de fond 301' de l'élément de réception 30' comprend un orifice traversant 32' positionné pour que son axe soit confondu avec l'axe 22' du cylindre 20' de l'élément de reprise d'effort lorsque ce dernier est logé dans le logement (figure 5), cet orifice 32' présentant un diamètre égal ou supérieur au diamètre de l'alésage 21' du cylindre 20'.

L'élément de réception 30' et l'élément de reprise d'effort 10' représentés sont fixés l'un à l'autre au moyen d'une vis 40'. L'extrémité 41' de la vis peut éventuellement déboucher dans l'espace 13' du caisson ceux 12', sans toutefois rentrer en contact avec la paroi inférieure 122' du caisson creux 12' (figure 5).

Selon une variante non représentée, l'élément de reprise d'effort 10' peut être dépourvu d'alésage 20' et l'élément de réception dépourvu d'orifice 32' pour le passage d'une vis 40'. Les branches 16'-19' de la croix d'indexation 14' se rejoignent alors au centre de la croix.

Selon une autre variante, les deux autres branches opposées 17', 19' de la croix d'indexation 14' peuvent également présenter chacune une extrémité formant un plan s'étendant dans la continuité du plan de la face externe de la paroi latérale plane adjacente 124', 126'. La reprise d'effort peut alors s'effectuer dans les deux directions de la croix d'indexation 14'.

Les différentes variantes décrites peuvent être combinées entre elles.

Tel que représenté sur les figures 2 et 4, l'élément de reprise d'effort 10' fait partie d'une pièce 1', par exemple la garniture principale 12 de la figure 1, et est disposé sur une face d'assemblage 2' de celle-ci. La paroi inférieure 122' du caisson creux 12' dudit élément de reprise d'effort fait ainsi partie de cette face d'assemblage 2'.

Tel que représenté sur la figure 4, une deuxième pièce 3', par exemple la garniture principale 14 de la figure 1, présente un élément de réception 30' pour recevoir l'un élément de reprise d'effort 10' de la première pièce 1'. En particulier, les faces externes des parois latérales 123', 124', 125', 126' de l'élément de reprise d'effort 10' et les faces internes des parois latérales 303'-306' de l'élément de réception 30' sont en contact lorsque l'élément de reprise d'effort 10' est logé dans l'élément de réception 30' (figure 5).

Les branches 16', 18' de la croix d'indexation dont les extrémités libres planes 161', 181' s'étendent dans la continuité des parois latérales planes 123', 125' adjacentes du caisson creux de l'élément de reprise s'étendent dans une direction parallèle au plan de coupe de la figure 5. Cette direction sera avantageusement choisie pour correspondre à la direction des forces les plus élevées exercées sur l'assemblage des pièces 1' et 3', par exemple la direction Z de la figure 1.

Ainsi, lorsque les éléments de réception 30' et de reprise d'effort 10' décrits ci-dessus sont utilisés comme boîtiers de reprise d'effort principaux M1, et optionnellement comme boîtiers de reprise d'effort secondaire M3, les branches 16', 18' de la croix d'indexation 14' sont orientées verticalement, suivant l'axe Z de la figure 1.

Lorsque les éléments de réception 30' et de reprise d'effort 10' décrits ci-dessus sont utilisés comme boîtier de reprise d'effort secondaire M4, les branches 16', 18' de la croix d'indexation 14' sont orientées suivant l'axe X de la figure 1.

Afin d'éviter tout risque d'apparition de retassure sur la face visible 4' de la pièce 1' lors de la réalisation par moulage de cette pièce, le caisson creux 12' pourra présenter une rainure 24' s'étendant sur les parois latérales internes des parois latérales 123-126 du caisson creux 12' à une distance suffisante de la paroi inférieure 122' (figure 3).

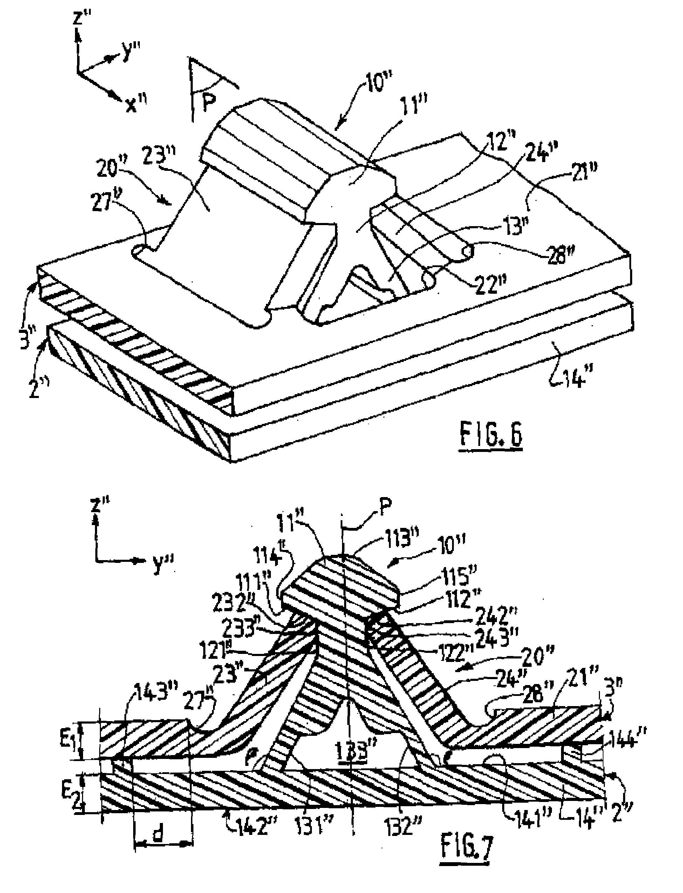

Un exemple de réalisation des moyens d'encliquetage M2 est décrit en référence aux figures 6 à 9.

Dans la description de ces figures 6-9, les termes supérieur, respectivement haut, et inférieur, respectivement bas, font référence à la direction de clippage des éléments mâle et femelle. Cette direction de clippage correspond à une direction de rapprochement des éléments mâle et femelle à encliqueter. Sur les figures 6-9, cette direction de clippage correspond à la direction verticale Z" d'un repère orthonormé axes X", Y", Z".

La figure 6 représente un assemblage 1" de deux pièces 2", 3" en matériau polymère assemblées au moyen d'au moins une paire d'éléments mâle 10" et femelle 20".

Dans l'exemple représenté, l'élément mâle 10" est issu de matière avec la pièce 2" dont la face inférieure 142" est destinée à être une face visible. L'élément femelle 20" est issu de matière avec la pièce 3". Ces pièces 2" et 3" sont par exemple des parties de garniture d'habitacle de voiture automobile.

L'élément mâle 10" s'étend suivant la direction de clippage Z" et comprend au moins un plan de symétrie P contenant la direction de clippage Z".

Cet élément mâle 10" comprend de haut en bas dans la direction de clippage Z" : une tête 11 ", une partie médiane 12", une base 13" de section transversale croissante vers le bas et un support plan 14" perpendiculaire au plan de symétrie P.

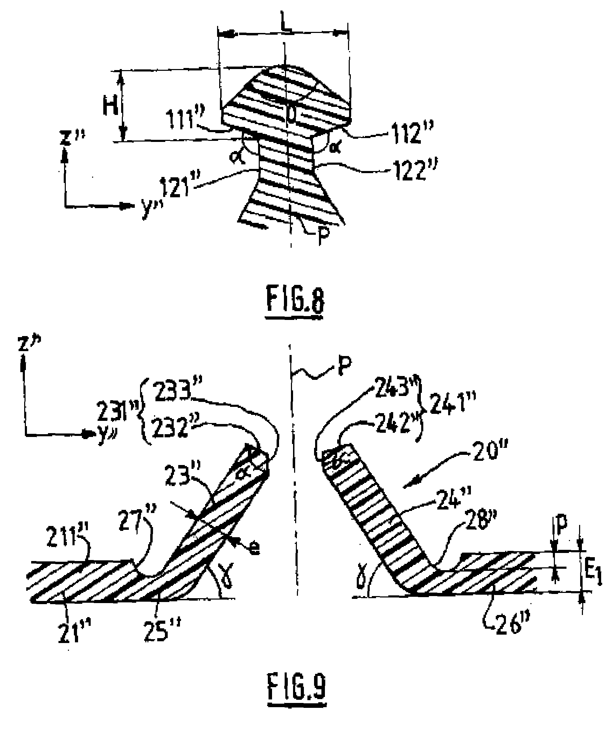

La tête 11" présente une forme conique suivant une section perpendiculaire au plan de symétrie P et contenant la direction de clippage (tel que visible sur les figures 7 et 8), la pointe du cône étant dirigée vers le haut.

La tête 11" comporte au moins deux parois inférieures planes 111" et 112" symétriques par rapport au plan de symétrie P.

L'extrémité supérieure 113" de la tête 11", qui correspond à l'extrémité de la forme conique, peut être arrondie, ce qui peut permettre de faciliter l'insertion de la tête dans l'orifice de l'élément femelle.

L'angle au sommet 10" de la forme conique de la tête 11" est de 70° à 90°, par exemple de 80°, c'est un rapport approprié entre les efforts de montage et le gain dimensionnel sur la hauteur totale.

L'extrémité inférieure de la forme conique de la tête 11" peut être reliée aux parois inférieures planes 111", 112" de la tête 11" par des parois latérales planes 114", 115" parallèles au plan de symétrie P, ce qui peut permettre de faciliter l'introduction de la tête 11" dans l'orifice de l'élément femelle 20".

La partie médiane 12" comprend deux parois latérales 121", 122" symétriques par rapport au plan de symétrie P. Dans l'exemple, ces parois latérales 121", 122" sont parallèles au plan de symétrie P.

Dans l'exemple, ces parois latérales 121", 122" de la partie médiane 12" et les parois inférieures 111", 112" de la tête 11" sont sensiblement de même dimension suivant une section perpendiculaire au plan de symétrie et contenant la direction de clippage (section correspondant à la section représentée sur la figure 7). Cette dimension peut être de façon non exhaustive de 1 à 3 mm, de préférence de 2 à 2,5 mm.

La base 13" présente une forme évasée vers le bas. Elle peut être formée de deux parois latérales 131", 132" planes, symétriques par rapport au plan de symétrie P, tel que représenté sur les figures.

En outre, la base 13" peut être au moins en partie évidée en son centre le long dudit support 14", cet évidement s'étendant en particulier parallèlement au plan de symétrie P et perpendiculairement à la direction de clippage Z". Un tel évidement peut permettre d'éviter que la base 13" ne soit visible sur la face 142" du support 14" opposée à la face 141" supportant la base 13", en particulier du fait de formation de retassures lors du moulage de l'élément mâle 10".

Dans l'exemple, la base 13" présente une partie évidée 133" en son centre le long du support plan 14", tel que visible sur les figures 6 et 7.

Ces parois latérales 131", 132" forment un angle β avec le support 14" de 100° à 130°, par exemple de 115°. L'épaisseur de ces parois latérales 131", 132" peut être de 0,8 à 1,5 mm au niveau de la partie évidée 133".

Le support plan 14" de l'élément mâle 10" comprend une face supérieure 141" et une face opposée inférieure 142", cette dernière correspondant ainsi à la face visible de la pièce 2". La base 13" est solidaire de la face supérieure 141" dans l'exemple.

Ce support plan 14" peut comprendre deux appuis 143", 144" situés symétriquement de part et d'autre de la base 13" par rapport au plan de symétrie P. Ces appuis 143", 144" s'étendent parallèlement au plan de symétrie P, sur toute la longueur de l'élément mâle 10" (autrement dit sur toute sa dimension suivant une direction perpendiculaire à la direction de clippage Z" et parallèle au plan de symétrie P, à savoir l'axe X" des figures 6-9). La dimension suivant la direction de clippage Z" des appuis 143", 144" est typiquement de 0,5 à 12 mm suivant l'orientation de la face visible de style 142 par rapport à l'axe de montage de l'ensemble des clips d'une même pièce, ici un exemple simple ; le support plan 21" est parallèle au support plan 14" et la dimension de 1 mm.

Les parois inférieures planes 111", 112" de la tête sont reliées chacune à une paroi latérale plane 121", 122" respectivement, de la partie médiane 12 ", chaque paroi inférieure 111", 112" de la tête 11" formant avec la paroi latérale adjacente 121", 122" de la partie médiane un angle α de 100° à 120°, par exemple de 108° tel que représenté sur la figure 8.

La largeur L de la tête 11 ", suivant une direction perpendiculaire au plan de symétrie P (correspondant à l'axe Y" des figures 6-9), est supérieure à la hauteur H de la tête suivant la direction de clippage Z", tel que visible figures 7 et 8.

Cette hauteur H peut être de 2 à 6 mm, par exemple de 3,8 mm. La largeur L peut être de 5 à 8 mm par exemple de 2,5 mm.

Ainsi, la hauteur totale de l'élément mâle, correspondant à sa dimension selon la direction de clippage Z" depuis la face supérieure 141" du support 14" jusqu'à l'extrémité supérieure 113" de la tête 11", peut être de 13 à 17 mm, par exemple de 15mm. L'ensemble peut être compris dans un parallélépipède de 25 x 15 x 15 mm. L'épaisseur E2 du support 14" peut être de 2 à 3,5 mm par exemple 2,5 mm.

L'élément femelle 20" présente le même plan de symétrie P contenant la direction de clippage Z" que l'élément mâle 10" lorsque ce dernier est clippé dans l'élément femelle 20".

L'élément femelle 20" comporte un support plan 21" pourvu d'un orifice de réception 22" de l'élément mâle.

L'élément femelle 20" est conformé pour que, lorsque le support 14" de l'élément mâle 10" est en appui contre le support 21" de l'élément femelle 20", les bords de l'orifice de réception 22" soient en contact avec les parois inférieures 111", 112" de la tête et les parois latérales 121", 122" de la partie médiane 12" de l'élément mâle 10", sans jeu suivant la direction de clippage Z".

Dans l'exemple représenté, l'orifice de réception 22" comprend deux languettes planes 23", 24" symétriques par rapport au plan de symétrie P.

Chaque extrémité libre 231", 241" d'une languette 23", 24" est formée de deux parois d'extrémité planes 232", 233" ; 242", 243" respectivement, inclinées d'un même angle α que l'angle α formé entre chaque paroi inférieure 111", 112" de la tête 11" de l'élément mâle 10" et la paroi latérale adjacente 121", 122" de la partie médiane 12". Ainsi, tel que représenté sur la figure 7, ces parois d'extrémité planes 232", 233" ; 242", 243" épousent les parois inférieures 111", 112" et latérales planes 121", 122" de l'élément mâle 10" lorsque ce dernier est clippé dans l'élément femelle 20".

Chaque languette 23", 24" est reliée au support 21" par une zone de matière amincie 25", 26" respectivement, par rapport à l'épaisseur E1 du support 21" et à l'épaisseur e de la languette 23", 24".

Cette zone de matière amincie 25", 26" est située entre l'extrémité de la languette 231", 241" et l'appui 143", 144" du support 14" de l'élément mâle 10" lorsque l'élément mâle 10" est clippé dans l'élément femelle 20".

Dans l'exemple, cette zone de matière amincie 25", 26" est obtenue par la réalisation d'une rainure 27", 28" réalisée sur la face supérieure 211" du support 21" de l'élément femelle 20", à la base de chaque languette 23", 24" sur toute la longueur de la languette (dimension suivant axe X des figures). Cette rainure 27", 28" présente une section transversale arrondie. La zone de matière amincie 25", 26" représentée sur les figures est en retrait de la face supérieure 211" du support 21" d'une distance allant de un cinquième à la moitié de l'épaisseur E1. L'épaisseur e des languettes 23", 24" est égale par exemple à quatre cinquième de l'épaisseur E1 du support 21", cette épaisseur étant en particulier comprise entre 1,5 mm et 3 mm (bornes incluses).

Chaque zone amincie 25", 26" est séparée de l'appui 143", 144" correspondant de l'élément mâle 10" d'une distance de 2,5 à 5 mm, par exemple 3,5mm.

L'angle d'inclinaison γ des languettes 23", 24" par rapport au plan du support 21" peut être de 100 à 130°, par exemple 118°. Il y a de préférence un écart entre l'angle béta des parois latérales 131", 132" de la base 13" et l'angle (180-γ) de 1 à 5°, par exemple 3° afin de garantir le contact des extrémités 232" et 242" des languettes 23" et 24" sur l'élément mâle 10".

A titre d'exemple, il est possible de réaliser un élément femelle 20" présentant les dimensions suivantes :
Epaisseur e d'une languette 23", 24" : 2 mm
Epaisseur E du support 21" : 2,5 mm

Dans l'exemple représenté sur la figure 1, les éléments mâle 10" et femelle 20" décrits ci-dessus, lorsqu'ils sont utilisés comme des moyens d'encliquetage M2, sont orientés de sorte que la direction d'encliquetage Z" des figures 6-9 correspondent à la direction transversale Y de la figure 1. En outre, les éléments mâles 10" et femelle 20" sont tous orientés dans une même direction, autrement dit, leurs plans de symétrie P sont parallèles entre eux. Dans l'exemple de la figure 1, leurs plans de symétrie P sont parallèles au plan XY de la figure 1.

## Revendications

1. Garniture (10) de porte de véhicule automobile en matériau polymère, ladite garniture (10) comprenant une partie principale (12) formant support et une partie secondaire (14) formant accoudoir fixée à la partie principale (12), **caractérisée en ce que** la partie secondaire (14) présente une bande périphérique d'assemblage (16) à la partie principale (12) s'étendant sur tout son pourtour et une surface d'appui (18) s'étendant sensiblement horizontalement lorsque la garniture est fixée à la porte et la porte fixée au véhicule et **en ce que** les parties principale (12) et secondaire (14) sont fixées l'une à l'autre par des moyens d'assemblage reliant ladite bande périphérique d'assemblage (16) à la partie principale (12), ces moyens d'assemblage comprenant chacun deux éléments dont l'un est solidaire de l'une des parties principale ou secondaire et l'autre élément est solidaire de l'autre des parties principale ou secondaire, ces moyens d'assemblage comprenant :
- au moins deux boîtiers de reprise d'effort principaux (M1) conformés et positionnés pour reprendre des efforts appliqués selon une même direction sensiblement perpendiculaire à la surface d'appui (18), les boîtiers de reprise d'effort principaux (M1) étant situés le long de la surface d'appui (18),
- une pluralité de moyens d'encliquetage (M2) répartis régulièrement le long de ladite bande périphérique d'assemblage.

2. Garniture (10) de porte selon la revendication 1, **caractérisée en ce que** les moyens d'assemblage comprennent au moins deux boîtiers de reprise d'effort secondaires (M3) conformés pour reprendre des efforts appliqués suivant une direction sensiblement perpendiculaire à la surface d'appui (18), ces boîtiers de reprise d'effort secondaires (M3) étant répartis au dessus et au dessous de la surface d'appui (18).

3. Garniture (10) de porte selon l'une des revendications 1 ou 2, **caractérisée en ce que** les moyens d'assemblage comprennent au moins un autre boîtier de reprise d'effort secondaire (M4) conformé pour reprendre des efforts appliqués suivant une direction sensiblement perpendiculaire au plan défini par la partie principale (12), au moins un de ces boîtiers de reprise d'effort secondaires (M4) étant situé en dessous de la surface d'appui (18).

4. Garniture (10) de porte selon la revendication 3, **caractérisée en ce qu'**au moins un des boîtiers de reprise d'effort secondaires (M4) est situé en dessous de la surface d'appui (18), sensiblement à hauteur du milieu de la surface d'appui (18).

5. Garniture (10) de porte selon l'une des revendications 1 à 4, **caractérisée en ce que** les moyens d'assemblage comprennent au moins un moyen de fixation (M5) destiné à fixer la garniture à une tôle formant la porte.

6. Garniture (10) de porte selon l'une des revendications 1 à 5, **caractérisée en ce que** les moyens d'encliquetage (M2) sont espacés d'une même distance de 40 à 130 mm.

7. Garniture (10) de porte selon l'une des revendications 1 à 6, **caractérisée en ce que** chaque boîtier de reprise d'effort principal (M1) ou secondaire (M3, M4) comprend un élément de reprise d'effort (10') solidaire de l'une des parties principale ou secondaire et un élément de réception (30') de cet élément de reprise d'effort solidaire de l'autre des parties principale ou secondaire, et :
- l'élément de reprise d'effort (10') comprend un caisson creux (12') de forme sensiblement parallélépipédique comprenant une paroi supérieure (121') et une paroi inférieure (122') reliées par des parois latérales dont au moins quatre parois latérales planes (123', 124', 125', 126') parallèles deux à deux, l'une (125') des parois latérales étant ouverte, le caisson creux (12') comprenant sur sa paroi supérieure (121'), des cloisons formant une croix d'indexage (14') à quatre branches (16', 17', 18', 19'), chaque branche (16', 17', 18', 19') s'étendant sensiblement perpendiculairement à l'une desdites quatre parois latérales planes (123', 124', 125', 126') du caisson creux (12') et au moins deux branches opposées (16', 18') de la croix d'indexage présentent chacune une extrémité libre (161';181') formant un plan s'étendant dans la continuité du plan de la face externe de la paroi latérale (123', 125') plane adjacente, et
- l'élément de réception (30') comprend une paroi de fond (301') et des parois latérales dont au moins quatre parois latérales planes (303', 304', 305', 306') parallèles deux à deux, les parois de fond (301') et latérales (303', 304', 305', 306') définissant un logement conformé pour recevoir l'élément de reprise d'effort (10'), cet élément de réception (30') étant conformé pour que, lorsque l'élément de reprise d'effort (10') est logé dans ledit logement :
- les parois latérales de l'élément de réception (30') soient en contact avec les parois latérales du caisson de l'élément de reprise d'effort (10'),
- la paroi de fond (301') de l'élément de réception (30') soit en contact avec la croix d'indexage (14') de l'élément de reprise d'effort (10'),
- au moins deux parois planes opposées (303', 305') de l'élément de réception (30') soient en contact avec les extrémités libres planes (161', 181') de deux branches opposées (16', 18') de la croix d'indexage (14') de l'élément de reprise d'effort.

8. Garniture de porte (10) selon la revendication 7, **caractérisée en ce que** des éléments de reprise d'effort (10') sont orientés de sorte que des branches de la croix d'indexation (14'), dont les extrémités libres planes s'étendent dans la continuité de la face externe des parois latérales planes adjacentes du caisson creux (12') de l'élément de reprise, s'étendent dans une direction sensiblement perpendiculaire à la surface d'appui (18) de la partie secondaire (14).

9. Garniture de porte (10) selon l'une des revendications 1 à 8, **caractérisée en ce que** chaque moyen d'encliquetage comprend un élément mâle (10") solidaire de l'une des parties principale ou secondaire et un élément femelle (20") conformé pour coopérer avec l'élément mâle suivant une direction de clippage (Z"), cet élément femelle (20") étant solidaire de l'autre des parties principale ou secondaire, les éléments mâle et femelle présentant un plan de symétrie (P) contenant la direction de clippage (Z") lorsqu'ils sont clippés, et :
- l'élément mâle (10") s'étend suivant la direction de clippage (Z") et comprend de haut en bas dans la direction de clippage : une tête (11"), une partie médiane (12"), une base (13") de section transversale croissante vers le bas, un support plan (14") perpendiculaire au plan de symétrie (P), la tête (11") présentant une forme conique suivant une section perpendiculaire au plan de symétrie (P) et contenant la direction de clippage (Z"), la pointe du cône étant dirigée vers le haut, et la tête (11") comporte au moins deux parois inférieures planes (111", 112") symétriques par rapport audit plan de symétrie (P), lesdites parois inférieures planes (111", 112") étant reliées chacune à une paroi latérale plane (121", 122") de la partie médiane (12"), ces parois latérales planes (121", 122") étant symétriques par rapport au plan de symétrie (P), chaque paroi inférieure (111", 112") de la tête (11") formant avec la paroi latérale (121", 122") de la partie médiane un angle (α) de 100 à 120°, et la largeur (L) de la tête (11"), suivant une direction perpendiculaire audit plan de symétrie (P) est supérieure à la hauteur (H) de la tête (11") suivant la direction de clippage (Z"),
- l'élément femelle (20") comporte un support plan (21") pourvu d'un orifice (22") de réception de l'élément mâle (10"), cet élément femelle (20") étant conformé pour que, lorsque le support (14") de l'élément mâle (10") est en appui contre le support (21") de l'élément femelle (20"), les bords de l'orifice (22") soient en contact avec les parois inférieures (111", 112") de la tête (11") et les parois latérales (121", 122") de la partie médiane (12") de l'élément mâle (10"), sans jeu suivant la direction de clippage (Z").

10. Garniture (10) de porte selon la revendication 9, **caractérisée en ce que** l'orifice (22") de l'élément femelle (20") comprend au moins deux languettes planes (23", 24") symétriques par rapport au plan de symétrie (P), chaque extrémité libre (231", 232") d'une languette étant formée de deux parois d'extrémité planes (232", 233" ;242", 243") inclinées d'un même angle (α) que l'angle (α) formé entre chaque paroi inférieure (111", 112 ") de la tête de l'élément mâle et la paroi latérale (121", 122") adjacente de la partie médiane (12"), de sorte que ces parois d'extrémité (232", 233" ;242", 243") épousent les parois inférieures (111", 112") et latérales (121", 122") de l'élément mâle lorsque ce dernier est clippé dans l'élément femelle.

11. Porte de véhicule comprenant une tôle et une garniture (10) selon l'une des revendications précédentes.

## Patentansprüche

1. Türverkleidung (10) für Kraftfahrzeug aus Polymermaterial, wobei die genannte Verkleidung (10) einen Hauptteil (12), der einen Träger bildet, und einen sekundären Teil (14), der eine Armlehne bildet und am Hauptteil (12) befestigt ist, umfasst, **dadurch gekennzeichnet, dass** der sekundäre Teil (14) einen Umfangsstreifen zum Zusammenbau (16) mit dem Hauptteil (12), der sich über seine gesamte Außenlinie erstreckt, und eine Auflagefläche (18), die sich weitestgehend horizontal erstreckt, wenn die Verkleidung an der Tür befestigt ist und die Tür am Fahrzeug befestigt ist, aufweist, und dass der Hauptteil (12) und der sekundäre Teil (14) aneinander durch Mittel zum Zusammenbau, die den genannten Umfangsstreifen zum Zusammenbau (16) mit dem Hauptteil (12) verbinden, befestigt sind, wobei diese Mittel zum Zusammenbau jeweils zwei Elemente umfassen, von denen eines fest mit einem des Hauptteils oder sekundären Teils verbunden ist, und das andere Element fest mit dem anderen des Hauptteils oder sekundären Teils verbunden ist, wobei diese Mittel zum Zusammenbau umfassen:
- mindestens zwei Hauptgehäuse zur Kraftübernahme (M1), die ausgebildet und positioniert sind, um nach einer gleichen, zur Auflagefläche (18) weitestgehend senkrechten Richtung ausgeübte Kräfte aufzunehmen, wobei sich die Hauptgehäuse zur Kraftübernahme (M1) entlang der Auflagefläche (18) befinden,
- eine Mehrzahl von Einrastmitteln (M2), die regelmäßig entlang des genannten Umfangsstreifens zum Zusammenbau verteilt sind.

2. Türverkleidung (10) nach Anspruch 1, **dadurch gekennzeichnet, dass** die Mittel zum Zusammenbau mindestens zwei sekundäre Gehäuse zur Kraftübernahme (M3) umfassen, die ausgebildet sind, um nach einer zur Auflagefläche (18) weitestgehend senkrechten Richtung ausgeübte Kräfte aufzunehmen, wobei diese sekundären Gehäuse zur Kraftübernahme (M3) über und unter der Auflagefläche (18) verteilt sind.

3. Türverkleidung (10) nach einem der Ansprüche 1 oder 2, **dadurch gekennzeichnet, dass** die Mittel zum Zusammenbau mindestens ein anderes sekundäres Gehäuse zur Kraftübernahme (M4) umfassen, das ausgebildet ist, um nach einer zu der vom Hauptteil (12) definierten Ebene weitestgehend senkrechten Richtung ausgeübte Kräfte aufzunehmen, wobei sich mindestens eines dieser sekundären Gehäuse zur Kraftübernahme (M4) unter der Auflagefläche (18) befindet.

4. Türverkleidung (10) nach Anspruch 3, **dadurch gekennzeichnet, dass** sich mindestens eines der sekundären Gehäuse zur Kraftübernahme (M4) unter der Auflagefläche (18), weitestgehend in Höhe der Mitte der Auflagefläche (18), befindet.

5. Türverkleidung (10) nach einem der Ansprüche 1 bis 4, **dadurch gekennzeichnet, dass** die Mittel zum Zusammenbau mindestens ein Befestigungsmittel (M5) umfassen, das dazu bestimmt ist, die Verkleidung an einem Blech, das die Tür bildet, zu befestigen.

6. Türverkleidung (10) nach einem der Ansprüche 1 bis 5, **dadurch gekennzeichnet, dass** die Einrastmittel (M2) in einem gleichen Abstand von 40 bis 130 mm zueinander angeordnet sind.

7. Türverkleidung (10) nach einem der Ansprüche 1 bis 6, **dadurch gekennzeichnet, dass** jedes Hauptgehäuse zur Kraftübernahme (M1) oder sekundäres Gehäuse zur Kraftübernahme (M3, M4) ein Element zur Kraftübernahme (10'), das fest mit einem des Hauptteils oder sekundären Teils verbunden ist, und ein Element zur Aufnahme (30') dieses Elements zur Kraftübernahme, das fest mit dem anderen des Hauptteils oder sekundären Teils verbunden ist, umfasst, und:
- das Element zur Kraftübernahme (10') einen hohlen Kasten (12') weitestgehend parallelepipedischer Form, umfassend eine obere Wand (121') und eine untere Wand (122'), die durch seitliche Wände, darunter mindestens vier ebene seitliche Wände (123', 124', 125', 126'), die paarweise parallel sind, wobei eine (125') der seitlichen Wände offen ist, verbunden werden, umfasst, wobei der hohle Kasten (12') an seiner oberen Wand (121') Stege, die ein Indexkreuz (14') mit vier Schenkeln (16', 17', 18', 19') bilden, umfasst, wobei sich jeder Schenkel (16', 17', 18', 19') weitestgehend senkrecht zu einer der genannten ebenen seitlichen Wände (123', 124', 125', 126') des hohlen Kastens (12') erstreckt und mindestens zwei gegenüberliegende Schenkel (16', 18') des Indexkreuzes je ein freies Ende (161'; 181') aufweisen, das eine Ebene bildet, die sich in der Fortsetzung der Ebene der Außenfläche der angrenzenden ebenen seitlichen Wand (123', 125') erstreckt, und
- das Element zur Aufnahme (30') eine Bodenwand (301') und seitliche Wände, darunter mindestens vier ebene seitliche Wände (303', 304', 305', 306'), die paarweise parallel sind, umfasst, wobei die Bodenwand (301') und die seitlichen Wände (303', 304', 305', 306') einen Sitz definieren, der ausgebildet ist, um das Element zur Kraftübernahme (10') aufzunehmen, wobei dieses Element zur Aufnahme (30') ausgebildet ist, damit, wenn das Element zur Kraftübernahme (10') im genannten Sitz sitzt:
- die seitlichen Wände des Elements zur Aufnahme (30') in Kontakt mit den seitlichen Wänden des Kastens des Elements zur Kraftübernahme (10') sind,
- die Bodenwand (301') des Elements zur Aufnahme (30') in Kontakt mit dem Indexkreuz (14') des Elements zur Kraftübernahme (10') ist,
- mindestens zwei gegenüberliegende ebene Wände (303', 305') des Elements zur Aufnahme (30') in Kontakt mit den freien ebenen Enden (161', 181') von zwei gegenüberliegenden Schenkeln (16', 18') des Indexkreuzes (14') des Elements zur Kraftübernahme sind.

8. Türverkleidung (10) nach Anspruch 7, **dadurch gekennzeichnet, dass** Elemente zur Kraftübernahme (10') dergestalt ausgerichtet sind, dass Schenkel des Indexkreuzes (14'), deren freien ebenen Enden sich in der Fortsetzung der Außenfläche der angrenzenden ebenen seitlichen Wände des hohlen Kastens (12') des Elements zur Übernahme erstrecken, sich in einer zur Auflagefläche (18) des sekundären Teils (14) weitestgehend senkrechten Richtung erstrecken.

9. Türverkleidung (10) nach einem der Ansprüche 1 bis 8, **dadurch gekennzeichnet, dass** jedes Einrastmittel ein Steck-Element (10"), das fest mit einem des Hauptteils oder sekundären Teils verbunden ist, und ein aufnehmendes Element (20"), das ausgebildet ist, um mit dem Steck-Element nach einer Klemmrichtung (Z") zusammenzuwirken, umfasst, wobei dieses aufnehmende Element (20") fest mit dem anderen des Hauptteils oder sekundären Teils verbunden ist, wobei das Steck-Element und das aufnehmende Element eine Symmetrieebene (P) aufweisen, die die Klemmrichtung (Z"), wenn sie geklemmt sind, enthält, und:
- das Steck-Element (10") sich nach der Klemmrichtung (Z") erstreckt und von oben nach unten in der Klemmrichtung umfasst: einen Kopf (11"), einen medianen Teil (12"), eine Basis (13") mit nach unten anwachsendem Querschnitt, einen ebenen Träger (14"), der senkrecht zur Symmetrieebene (P) ist, wobei der Kopf (11") eine konische Form nach einem Querschnitt, der senkrecht zur Symmetrieebene (P) ist und die Klemmrichtung (Z") enthält, aufweist, wobei die Konusspitze nach oben gerichtet ist, und der Kopf (11") mindestens zwei ebene untere Wände (111", 112"), die bezogen auf die genannte Symmetrieebene (P) symmetrisch sind, aufweist, wobei die genannten ebenen unteren Wände (111", 112") jede mit einer ebenen seitlichen Wand (121", 122") des medianen Teils (12") verbunden sind, wobei diese ebenen seitlichen Wände (121", 122") bezogen auf die Symmetrieebene (P) symmetrisch sind, wobei jede untere Wand (111", 112") des Kopfes (11") mit der seitlichen Wand (121", 122") des medianen Teils einen Winkel (α) von 100 bis 120° bildet, und die Breite (L) des Kopfes (11"), nach einer zur genannten Symmetrieebene (P) senkrechten Richtung, größer als die Höhe (H) des Kopfes (11") nach der Klemmrichtung (Z") ist,
- das aufnehmende Element (20") einen ebenen Träger (21"), versehen mit einer Öffnung (22") zur Aufnahme des Steck-Elements (10"), aufweist, wobei dieses aufnehmende Element (20") ausgebildet ist, damit, wenn der Träger (14") des Steck-Elements (10") gegen den Träger (21") des aufnehmenden Elements (20") abgestützt ist, die Ränder der Öffnung (22") mit den unteren Wänden (111", 112") des Kopfes (11") und den seitlichen Wänden (121", 122") des medianen Teils (12") des Steck-Elements (10"), ohne Spiel nach der Klemmrichtung (Z"), in Kontakt sind.

10. Türverkleidung (10) nach Anspruch 9, **dadurch gekennzeichnet, dass** die Öffnung (22") des aufnehmenden Elements (20") mindestens zwei ebene Zungen (23", 24"), die bezogen auf die Symmetrieebene (P) symmetrisch sind, umfasst, wobei jedes freie Ende (231", 232") einer Zunge aus zwei ebenen Endwänden (232", 233"; 242", 243") gebildet ist, die in einem gleichen Winkel (α) wie der Winkel (α), der zwischen jeder unteren Wand (111", 112") des Kopfes des Steck-Elements und der angrenzenden seitlichen Wand (121", 122") des medianen Teils (12") gebildet wird, geneigt sind, dergestalt, dass diese Endwände (232", 233"; 242", 243") den unteren Wänden (111", 112") und seitlichen Wänden (121", 122") des Steck-Elements, wenn dieses in das aufnehmende Element geklemmt ist, angepasst sind.

11. Fahrzeugtür umfassend ein Blech und eine Verkleidung (10) nach einem der vorangegangenen Ansprüche.

## Claims

1. Door trim (10) made of polymeric material for a motor vehicle, said trim (10) comprising a main part (12) forming a support and a secondary part (14) forming an arm-rest, fixed to the main part (12), **characterized in that** the secondary part (14) has a peripheral strip (16) for assembly onto the main part (12), extending over the whole of its perimeter, and a bearing surface (18) extending substantially horizontally when the trim is fixed to the door and the door is fixed to the vehicle, and **in that** the main (12) and secondary (14) parts are fixed to one another by assembly means connecting said peripheral assembly strip (16) to the main part (12), these assembly means each comprising two elements, one of which is integral with one of the main and secondary parts, while the other element is integral with the other of the main and secondary parts, these assembly means comprising:
- at least two main load take-up housings (M1) shaped and positioned so as to take up loads applied in a single direction substantially perpendicular to the bearing surface (18), the main load take-up housings (M1) being located along the bearing surface (18),
- a plurality of snap-fitting means (M2) evenly distributed along said peripheral assembly strip.

2. Door trim (10) according to Claim 1, **characterized in that** the assembly means comprise at least two secondary load take-up housings (M3), shaped so as to take up loads applied in a direction substantially perpendicular to the bearing surface (18), these secondary load take-up housings (M3) being distributed above and below the bearing surface (18).

3. Door trim (10) according to either of Claims 1 and 2, **characterized in that** the assembly means comprise at least one other secondary load take-up housing (M4) shaped so as to take up loads applied in a direction substantially perpendicular to the plane defined by the main part (12), at least one of these secondary load take-up housings (M4) being located below the bearing surface (18).

4. Door trim (10) according to Claim 3, **characterized in that** at least one of the secondary load take-up housings (M4) is located below the bearing surface (18), substantially at the height of the middle of the bearing surface (18).

5. Door trim (10) according to any of Claims 1 to 4, **characterized in that** the assembly means comprise at least a fixing means (M5) for fixing the trim to a metal sheet forming the door.

6. Door trim (10) according to any of Claims 1 to 5, **characterized in that** the snap-fitting means (M2) are spaced apart at the same distance of 40 to 130 mm.

7. Door trim (10) according to any of Claims 1 to 6, **characterized in that** each main (M1) or secondary (M3, M4) load take-up housing comprises a load take-up element (10') integral with one of the main or secondary parts and an element (30') for receiving this load take-up element, integral with the other of the main and secondary parts, and:
- the load take-up element (10') comprises a hollow box (12') of substantially parallelepipedal shape, comprising a top wall (121') and a bottom wall (122') joined by side walls including at least four flat side walls (123', 124', 125', 126') parallel to one another in pairs, one (125') of the side walls being open, the hollow box (12') comprising, on its top wall (121'), partitions forming a positioning cross (14') with four branches (16', 17', 18', 19'), each branch (16', 17', 18', 19') extending substantially perpendicularly to one of said four flat side walls (123', 124', 125', 126') of the hollow box (12'), and at least two opposed branches (16', 18') of the positioning cross each having a free end (161'; 181') forming a plane extending in the continuation of the plane of the outer face of the adjacent flat side wall (123', 125'), and
- the receiving element (30') comprises an end wall (301') and side walls, including at least four flat side walls (303', 304', 305', 306') parallel to one another in pairs, the end wall (301') and side walls (303', 304', 305', 306') forming a housing shaped to receive the load take-up element (10'), this receiving element (30') being shaped so that, when the load take-up element (10') is housed in said housing:
- the side walls of the receiving element (30') are in contact with the side walls of the box of the load take-up element (10'),
- the end wall (301') of the receiving element (30') is in contact with the positioning cross (14') of the load take-up element (10'),
- at least two opposed flat walls (303', 305') of the receiving element (30') are in contact with the flat free ends (161', 181') of two opposed branches (16', 18') of the positioning cross (14') of the load take-up element.

8. Door trim (10) according to Claim 7, **characterized in that** load take-up elements (10') are oriented so that the branches of the positioning cross (14') whose flat free ends extend in the continuation of the outer face of the adjacent flat side walls of the hollow box (12') of the load take-up element extend in a direction substantially perpendicular to the bearing surface (18) of the secondary part (14).

9. Door trim (10) according to any of Claims 1 to 8, **characterized in that** each snap-fitting means comprises a male element (10") integral with one of the main and secondary parts and a female element (20") shaped to interact with the male element in a direction of clipping (Z"), this female element (20") being integral with the other of the main and secondary parts, the male and female elements having a plane of symmetry (P) containing the clipping direction (Z") when they are clipped, and:
- the male element (10") extends in the clipping direction (Z") and comprises, from top to bottom in the clipping direction, a head (11"), a median part (12"), a base (13") with a downwardly increasing cross-section, and a flat support (14") perpendicular to the plane of symmetry (P), the head (11") having a conical shape according to a section perpendicular to the plane of symmetry (P) and containing the clipping direction (Z"), the tip of the cone pointing upward, and the head (11") has at least two flat bottom walls (111", 112") symmetrical with respect to said plane of symmetry (P), said flat bottom walls (111", 112") each being connected to a flat side wall (121", 122") of the median part (12"), these flat side walls (121", 122") being symmetrical with respect to the plane of symmetry (P), each bottom wall (111", 112") of the head (11") forming an angle (α) of 100° to 120° with the side wall (121", 122") of the median part, and the width (L) of the head (11") in a direction perpendicular to said plane of symmetry (P) is greater than the height (H) of the head (11") in the clipping direction (Z"), and
- the female element (20") has a flat support (21") provided with an opening (22") for receiving the male element (10"), this female element (20") being shaped so that, when the support (14") of the male element (10") bears against the support (21") of the female element (20"), the edges of the opening (22") are in contact with the bottom walls (111", 112") of the head (11") and the side walls (121", 122") of the median part (12") of the male element (10"), without any play in the clipping direction (Z").

10. Door trim (10) according to Claim 9, **characterized in that** the opening (22") of the female element (20") comprises at least two flat tabs (23", 24") which are symmetrical with respect to the plane of symmetry (P), each free end (231", 232") of a tab being formed by two flat end walls (232", 233"; 242", 243") inclined at the same angle (α) as the angle (α) formed between each bottom wall (111", 112") of the head of the male element and the adjacent side wall (121", 122") of the median part (12"), so that these end walls (232", 233"; 242", 243") mate with the bottom (111", 112") and side (121", 122") walls of the male element when the latter is clipped into the female element.

11. Vehicle door comprising a metal sheet and a trim (10) according to any of the preceding claims.
